# EUROPEAN PATENT APPLICATION

(11) **EP 2 457 974 A1**
(43) Date of publication of application: **30.05.2012**
(21) Application number: 10290599.9
(22) Date of filing: 05.11.2010
(51) Int. Cl.: C09K 8/42, C09K 8/467, C04B 16/06

(54) **Cement compositions and methods for well completions**

(71) Applicant: Services Pétroliers Schlumberger, 75007 Paris (FR); Schlumberger Technology B.V., 2514 JG The Hague (NL); Schlumberger Holdings Limited, Tortola (VG); PRAD Research and Development Limited, Road Town, Tortola (VG)
(72) Inventor: Drochon, Bruno, Cambridge, CB1 7ST (GB); James, Simon, 92350 Le Plessis-Robinson (FR)
(74) Representative: Vandermolen, Mathieu

(57) **Abstract**

Expansive cements for use in cementing subterranean wells are based on a water-in-oil emulsion. The emulsion comprises water, an inorganic cement, a surfactant, a water-immiscible fluid, and one or more particulate materials that swell when contacted by a water-immiscible fluid. The water-immiscible fluid is the internal phase of the emulsion, and is isolated from the swellable particulate material until the cement system sets.

## Description

### BACKGROUND OF THE INVENTION

The statements in this section merely provide background information related to the present disclosure and may not constitute prior art.

This invention relates to compositions and methods for treating subterranean formations, in particular, compositions and methods for cementing subterranean wells.

During the construction of subterranean wells, it is common, during and after drilling, to place a tubular body in the wellbore. The tubular body may comprise drillpipe, casing, liner, coiled tubing or combinations thereof. The purpose of the tubular body is to act as a conduit through which desirable fluids from the well may travel and be collected. The tubular body is normally secured in the well by a cement sheath. The cement sheath provides mechanical support and hydraulic isolation between the zones or layers that the well penetrates. The latter function is important because it prevents hydraulic communication between zones that may result in contamination. For example, the cement sheath blocks fluids from oil or gas zones from entering the water table and polluting drinking water. In addition, to optimize a well's production efficiency, it may be desirable to isolate, for example, a gas-producing zone from an oil-producing zone. The cement sheath achieves hydraulic isolation because of its low permeability. In addition, intimate bonding between the cement sheath and both the tubular body and borehole is necessary to prevent leaks.

Poor cement-sheath bonding may have several negative consequences. Interzonal hydraulic communication may interfere with proper well production, allow formation fluids to corrode the casing, and result in an environmental incident should hydrocarbons or saline fluids commingle with aquifers. The effectiveness of stimulation treatments may also be hampered, further limiting well production. Frequently, poor bonding is manifested by the presence of gaps, or "microannuli," along the cement/casing interface, the cement/formation interface or both.

Cement systems that expand slightly (preferably less than about 1% linear expansion) after setting are a proven means for sealing microannuli and improving primary cementing results. The improved bonding is the result of mechanical resistance or tightening of the cement against the pipe and formation.

Some expansive cement systems rely upon the formation of the mineral ettringite to induce expansion. Ettringite is a calcium sulfoaluminate mineral that forms when the aluminate phases in Portland cement react with various forms of added calcium sulfate (usually calcium sulfate hemihydrate). Ettringite crystals have a larger bulk volume than the reactants from which they form; consequently, expansion occurs because of the internal pressure exerted upon crystallization. A limitation of ettringite-based systems is their inability to provide significant expansion at curing temperatures above about 76°C (170°F). Ettringite is not stable at higher temperatures and converts to another sulfoaluminate mineral that does not impart expansion.

Another type of expanding cement involves cement slurries containing high concentrations of NaCl, Na₂SO₄, or both. After the cement sets, cement expansion occurs because of internal pressure exerted by the crystallization of the salts within pores, and by chlorosilicate and chlorosulfoaluminate reactions. These systems may be effective at temperatures up to 204°C (400°F). However, the high cement-slurry salinity may cause casing corrosion, and may interfere with the performance of other cement additives-fluid-loss additives in particular.

Zinc, magnesium, iron and aluminum powders may be used to prepare expansive cements. When added to the high-pH environment of a Portland-cement slurry, the metals react and produce hydrogen-gas bubbles. The resulting pressurization causes the cement to expand before and after setting; however, the effectiveness of these additives may be limited by the ideal-gas law as well depth increases. In addition, the expansive effect may be temporary as the increased pore pressure may dissipate with time.

Addition of calcined calcium oxide or magnesium oxide also may result in cement expansion after setting. The oxide hydration results in the formation of a hydroxide that is less dense than the reactants, thereby providing an expansive force within the cement matrix. These oxide systems have been employed successfully at temperatures up to about 260°C (500°F); however, the rate at which they react, and hence the expansion generated, may be difficult to control. If the additive hydrates too quickly (e.g., before the cement sets), little or no cement expansion will occur. If the additives hydrate too slowly, the expansion may occur too late and allow interzonal communication.

A more complete discussion of expansive cement systems may be found in the following publication. Nelson EB, Drochon B, Michaux M and Griffin TJ: "Special Cement Systems," in Nelson EB and Guillot D. (eds.): Well Cementing (2nd Edition), Schlumberger, Houston (2006) 233-268.

Despite the valuable contributions of the prior art, there remains a need for cement systems whose expansion may be more precisely controlled-preferably as soon as possible after the cement has set.

### SUMMARY OF THE INVENTION

Embodiments allow improvements by providing cement systems that expand at the optimal time-shortly after the cement sets.

In an aspect, embodiments relate to well-cementing compositions.

In a further aspect, embodiments relate to methods for cementing a subterranean well.

In yet a further aspect, embodiments relate to the use of an emulsion as a cement slurry.

### BRIEF DESCRIPTION OF THE DRAWINGS

Figure 1 is a graph showing the particle-size distributions of the particulates tested in Example 1.

Figure 2 is a graph showing the results of cement-expansion tests described in Example 1.

Figure 3 is a graph showing the results of cement-expansion tests in an oven at 50°C.

### DETAILED DESCRIPTION

At the outset, it should be noted that in the development of any such actual embodiment, numerous implementations-specific decisions must be made to achieve the developer's specific goals, such as compliance with system-related and business-related constraints, which will vary from one implementation to another. Moreover, it will be appreciated that such a development effort might be complex and time-consuming, but would nevertheless be a routine undertaking for those of ordinary skill in the art having the benefit of this disclosure. In addition, the composition used/disclosed herein may also comprise some components other than those cited. In the summary of the invention and this detailed description, each numerical value should be read once as modified by the term "about" (unless already expressly so modified), and then read again as not so modified unless otherwise indicated in context. Also, in the summary of the invention and this detailed description, it should be understood that a concentration range listed or described as being useful, suitable, or the like, is intended that any and every concentration within the range, including the end points, is to be considered as having been stated. For example, "a range of from 1 to 10" is to be read as indicating each and every possible number along the continuum between about 1 and about 10. Thus, even if specific data points within the range, or even if no data points within the range, are explicitly identified or refer to only a few specific ones, it is to be understood that the inventors appreciate and understand that any and all data points within the range are to be considered to have been specified, and that the inventors possessed knowledge of the entire range and all points within the range.

As stated earlier, there is a need for cement systems that expand shortly after the cement sets. The inventors have provided such systems by incorporating particulate materials that are susceptible to swelling when exposed to water-immiscible fluids. Surprisingly, they discovered that, when a water-immiscible fluid and a surfactant are incorporated in the aqueous cement slurry to form an emulsion, the swellable particles are protected from the water-immiscible fluid so long as the slurry remains fluid. The internal phase of the emulsion comprises the water-immiscible fluid. In this document the terms "water-immiscible fluid" and "oil" shall be used interchangeably. Therefore, the disclosed emulsions are "oil-in-water" emulsions.

Without wishing to be bound by any theory, when the slurry begins to set, and consumption of interstitial water in the cement slurry accelerates, the internal phase of the emulsion becomes unstable, thereby allowing the swellable particles to contact the water-immiscible fluid. Upon contact, the volume of the swellable particles increases, thereby inducing set-cement expansion.

Therefore, embodiments relate to well-cementing compositions that comprise an emulsion comprising water, an inorganic cement, a surfactant, a water-immiscible fluid and one or more particulate materials that swell upon contact with a water-immiscible fluid. The surfactant is present to stabilize the oil-in-water emulsion. The internal phase of the emulsion comprises the water-immiscible fluid. The composition may be pumpable, with a viscosity that is preferably below 1000 mPa-s at a shear rate of 100 s⁻¹.

In a further aspect, embodiments relate to methods for cementing a subterranean well, comprising providing a well-cementing composition comprising an emulsion that comprises water, an inorganic cement, a surfactant, a water-immiscible fluid and one or more particulate materials that swell upon contact with a water-immiscible fluid. The emulsion is an oil-in-water emulsion, wherein the internal phase comprises the water-immiscible fluid. The surfactant is present to stabilize the emulsion. The composition is then pumped into the well. Those skilled in the art will recognize that embodiments of the method may relate to either primary or remedial cementing. In addition, those skilled in the art will recognize that the composition may be pumped through various tubulars including (but not limited to) drillpipe, casing and coiled tubing. The cementing procedure may be the traditional one during which the cement composition is pumped downward through tubulars, and upward inside the annulus between the tubulars and the borehole wall, or between the tubulars and another tubular string. Or, the "reverse-cementing" procedure may be employed, during which the cement composition is pumped downward through the annulus.

In yet a further aspect, embodiments relate to the use of an emulsion as a cement slurry. The emulsion comprises water, an inorganic cement, a surfactant, a water-immiscible fluid and one or more particulate materials that swell upon contact with a water-immiscible fluid. The internal phase of the emulsion comprises a water-immiscible fluid. The surfactant is present to stabilize the emulsion.

For all embodiments, the surfactant preferably has a hydrophile-lipophile balance (HLB) number between about 8 and 18, and more preferably between about 12 and 16. A list of suitable surfactants may be found in the following publication: Ash M and Ash I: Handbook of Industrial Surfactants (4th Edition), Synapse Information Resources, Endicott, New York (2005). The surfactant should not significantly affect the rheological properties and the setting of the cement slurry. The surfactant may provide additional control of the swelling process. For example, the surfactant may be chosen such that its performance deteriorates with temperature changes, salinity increases, increasing pH or combinations thereof, thereby favoring exposure of the swellable particles to the water-immiscible fluid.

The inorganic cement may be chosen from (but would not be limited to) one or more members of the following list: Portland cement, calcium aluminate cement, lime-silica blends, geopolymers, Sorel cements, chemically bonded phosphate ceramics, zeolites and cement-kiln dust. The cements may further comprises extenders such as (but not limited to) fly ash, blast-furnace slag, silica, silica fume, nanosilica and nanoalumina.

The swellable particulate material may comprise (but would not be limited to) ground rubber, polypropylene, uintaite, uintahite, poly-2, 2, 1-bicyclo heptene (polynorbornene), alkylstyrene, crosslinked substituted vinyl acrylate copolymers, polyisoprene, polyvinyl acetate, polychloroprene, acrylonitrile butadiene, hydrogenated acrylonitrile butadiene, ethylene propylene diene monomer, ethylene propylene monomer, styrene-butadiene, styrene/propylene/diene monomer, brominated poly(isobutylene-co-4-methylstyrene), chlorosulphonated polyethylenes, polyacrylates, polyurethanes, silicones, chlorinated polyethylene, epichlorohydrin ethylene oxide copolymer, ethylene acrylate rubber, ethylene propylene diene terpolymers, sulphonated polyethylene, fluorosilicones, fluoroelastomer, substituted styrene acrylate copolymers and mixtures thereof. Of these, ground rubber, polypropylene, unitaite and unitahite are preferred. Uintaite and unitahite are generic names for Gilsonite™-produced by the American Gilsonite Company. Additional particle/solvent combinations may be selected by consulting the following publication: Chemical Resistance of Plastics and Elastomers (4th Electronic Edition), William Andrew Publishing/Plastics Design Library, Norwich, New York (2008). The particle size of the swellable material is preferably between about 1 µm and 1 mm, more preferably between about 10 µm and 1 mm and most preferably between about 100 µm and 1 mm. The concentration of the swellable material is preferably between about 1% and 25% by volume of the composition, and more preferably between about 5% and 15% by volume of the composition.

In addition to the swellable particles, the cement slurries may also comprise customary additives such as retarders, accelerators, extenders, fluid-loss-control additives, lost-circulation additives, gas-migration additives, gas generating additives and antifoam agents. Furthermore, the cement slurries may contain additives that enhance the flexibility and/or toughness of the set cement. Such additives include (but are not limited to) flexible particles having a Young's modulus below about 5000 MPa and a Poisson's ratio above about 0.3. Preferably, such particles would have a Young's modulus below about 2000 MPa. Examples include (but are not limited to) polyethylene, acrylonitrile butadiene, styrene butadiene, polyamide, polytetrafluoroethylene, polyether ether ketone, perfluoroalkoxy polymer resin, fluorinated ethylenepropylene, polyethylenetetrafluoroethylene, polyvinylfluoride, polychlorotrifluororethylene, perfluoroelastomers, fluorocarbon elastomers and combinations thereof. Such additives may also include fibers selected from the list comprising polyamide, polyethylene and polyvinyl alcohol. Metallic microribbons may also be included.

The swellable particles may also be used in engineered-particle-size cement formulations involving trimodal or quadrimodal blends of small, medium and coarse particles. Such formulations may be exemplified in US 5,518,996 and/or CA 2,117,276.

The water-immiscible fluid may comprise (but would not be limited to) mineral oil, diesel oil, vegetable oil, linear alpha-olefins, xylene, toluene and combinations thereof. Preferably, the water-immiscible fluid should not irremediably affect the performance of cement additives present in the external phase of the emulsion. The volumetric concentration of the water-immiscible fluid may be between about 1% and about 50% of the total fluid volume, more preferably between about 5% and about 25% of the total fluid volume, and most preferably between about 10% and about 20% of the total fluid volume.

The present invention provides several additional advantages. For example, the time at which expansion occurs may be a function of the thickening time. The level of expansion may be controlled by the type of swellable particles, the swellable-particle concentration and/or the volumetric ratio between the swellable particles and the water-immiscible fluid. Furthermore, the swellable particles may also impart cement-sheath flexibility by reducing the Young's modulus of the set cement.

Those skilled in the art will appreciate that the disclosed method and use may not necessarily be applied throughout the entire length of the subterranean interval being cemented. In such cases, more than one cement-slurry composition is placed sequentially. The first slurry is called the "lead," and the last slurry is called the "tail." Under these circumstances, it may sometimes be preferable to place the inventive slurry such that it resides in regions where hydrocarbons exist. In most cases, this would be at or near the bottom of the well; therefore, the inventive method and use may preferably apply to the tail. Those skilled in the art will also appreciate that the disclosed method and use would not only be useful for primary cementing, but also for remedial cementing operations such as squeeze cementing and plug cementing.

Other and further objects, features and advantages of the present invention will be readily apparent to those skilled in the art upon a reading of the description of the example which follows, taken in conjunction with the accompanying drawings.

### EXAMPLES

The following examples serve to further illustrate the invention.

### EXAMPLE 1

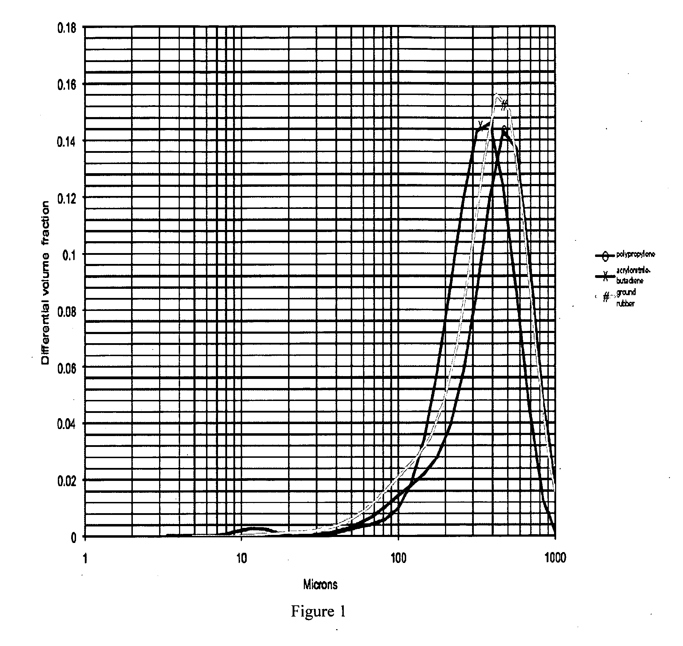

Four cement slurries were prepared. Three particulates were tested-ground rubber, polyproplyene and acrylonitrile-butadiene. The particle-size distributions of the particulates are shown in Fig. 1. They were added at concentrations between 5% and 10% by weight of cement (BWOC). Acrylonitrile-butadiene does not swell to a significant extent in mineral oil, and was therefore used as a control.

The water-immiscible phase was mineral oil (Exxsol D100, available from ExxonMobil). An emulsifying surfactant, Akzo Nobel GT2624 (short chained synthetic alcohol alkoxylate), was present. In addition, a silicone antifoam agent, an antisettling agent based on welan gum, and polynaphthalene-sulfonate dispersant were present. Water was added such that the solids-volume fraction (SVF) in the slurries was 40.5%.

**Table 1. Slurry Compositions.**

| | **A** | **B** | **C** | **D** |
|---|---|---|---|---|
| Ground rubber | 5% BWOC | 10% BWOC | - | - |
| Particulate polypropylene | - | - | 10% BWOC | - |
| Particulate acrylonitrile- | - | - | - | 10% BWOC |
| butadiene | | | | |
| | | | | |
| Mineral oil | 48.5 L/tonne | 108.5 L/tonne | 116 L/tonne | 112 L/tonne |
| Akzo Nobel GT2624 surfactant | 4.4 L/tonne | 9.9 L/tonne | 10.5 L/tonne | 10.2 L/tonne |
| | | | | |
| Silicone antifoam | 2.7 L/tonne | 2.7 L/tonne | 2.7 L/tonne | 2.7 L/tonne |
| Antisettling agent | 0.6% BWOC | 0.6% BWOC | 0.6% BWOC | 0.6% BWOC |
| PNS dispersant | 6.7 L/tonne | 6.7 L/tonne | 6.7 L/tonne | 6.7 L/tonne |
| Lignosulfonate retarder | - | - | - | - |
| | | | | |
| Water | 461 L/tonne | 457 L/tonne | 490 L/tonne | 472 L/tonne |
| SVF | 40.5% | 40.5% | 40.5% | 40.5% |

System A contained 5% BWOC ground rubber and 5% mineral oil by volume of mix fluid. Initially, the surfactant concentration was optimized such that the emulsion was stable for approximately 1 hour. The optimal surfactant concentration was 9% by volume of oil. The concentration of anti-settling agent was then adjusted to provide a stable slurry at 50°C (i.e., no free fluid and no sedimentation).

System B contained 10% BWOC ground rubber and higher concentrations of mineral oil and surfactant. System C contained polypropylene particles. System D was the control system containing acrylonitrile-butadiene particles.

The cement slurries were prepared in a Waring blender by the following procedure. First, the anti-settling agent was pre-hydrated in water for 5 minutes at 4000 RPM. Second, the blender speed was reduced to 1000 RPM, and antifoam agent, dispersant and surfactant were added to the blender. Third, the mineral oil was added during a 15-second period. Fourth, the blender speed was increased to 4000 RPM, and the cement and swellable particles were added during a 15-second period. Fifth, the blender speed was increased to 12,000 RPM, and mixing continued for 35 seconds. The resulting slurry was an oil-in-water emulsion. The swellable particulates and cement resided in the external aqueous phase.

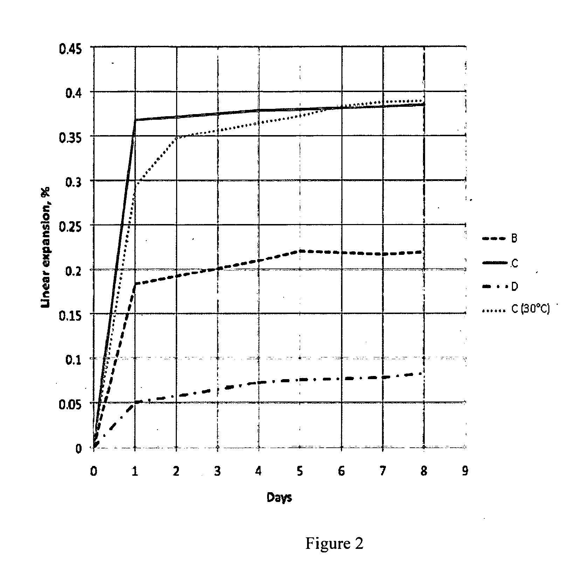

Cement-expansion measurements were performed in accordance with the recommended procedure described in ISO Publication 10426-5. The method involves split-ring expansion cells. Most of the tests were performed at 50°C. One test was performed at 30°C to evaluate the effect of temperature. The results are presented in Fig 2. The cement slurry containing polypropylene particles (C) provided the most linear expansion. As expected, the control system (D) provided very little expansion. Almost all of the expansion took place within 24 hours.

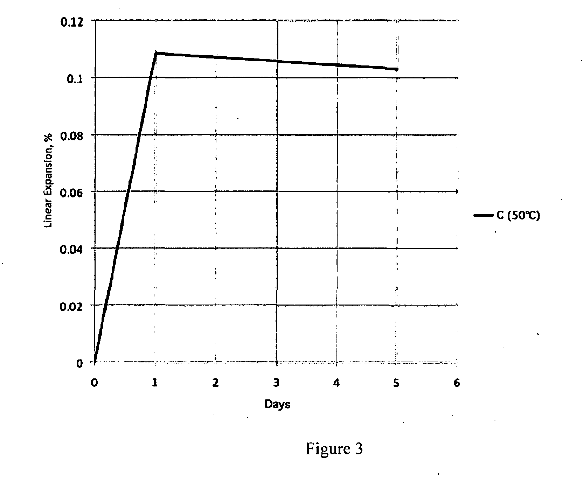

Figure 3 shows the results of tests performed in a different manner. The test slurry was System C, containing polypropylene particles. Deviating from the ISO procedure, the expansion rings were placed in an oven and were not in contact with water. However, the cement specimens were covered with grease. Most of the expansion occurred within 1 day of curing.

## Claims

1. A well-cementing composition, comprising an emulsion that comprises water, an inorganic cement, a surfactant, a water-immiscible fluid, and one or more water-immiscible fluid swelling particulate materials.

2. The composition of claim 1, wherein the surfactant has an HLB value between about 8 and 18.

3. The composition of claim 1 or 2, wherein the inorganic cement comprises one or more members of the list comprising: Portland cement, calcium aluminate cement, lime-silica blends, geopolymers, Sorel cements, chemically bonded phosphate ceramics, zeolites and cement-kiln dust.

4. The composition of any one of claims 1-3, wherein the particulate material comprises one or more members of the list comprising: ground rubber, polypropylene, uintaite, uintahite, poly-2, 2, 1-bicyclo heptene (polynorbornene), alkylstyrene, crosslinked substituted vinyl acrylate copolymers, polyisoprene, polyvinyl acetate, polychloroprene, acrylonitrile butadiene, hydrogenated acrylonitrile butadiene, ethylene propylene diene monomer, ethylene propylene monomer, styrene-butadiene, styrene/propylene/diene monomer, brominated poly(isobutylene-co-4-methylstyrene), chlorosulphonated polyethylenes, polyacrylates, polyurethanes, silicones, chlorinated polyethylene, epichlorohydrin ethylene oxide copolymer, ethylene acrylate rubber, ethylene propylene diene terpolymers, sulphonated polyethylene, fluorosilicones, fluoroelastomer and substituted styrene acrylate copolymers.

5. The composition of any one of claims 1-4, wherein the particle size of the particulate material is between about 1 µm and about 1 mm, and the particulate-material concentration is between about 1% and about 25% by volume of the composition.

6. The composition of any one of claims 1-5, wherein the water-immiscible fluid comprises one or more members of the list comprising: mineral oil, diesel oil, vegetable oil, linear alpha-olefins, xylene and toluene, and the volumetric concentration of the water-immiscible fluid is between about 1% and about 50% of the total liquid volume.

7. A method for cementing a subterranean well, comprising:
(i) providing a well-cementing composition comprising an emulsion that comprises water, an inorganic cement, a surfactant, a water-immiscible fluid, and one or more water-immiscible fluid swelling particulate materials; and
(ii) pumping the composition into the well.

8. The method of claim 7, wherein the inorganic cement comprises one or more members of the list comprising: Portland cement, calcium aluminate cement, fly ash, blast-furnace slag, lime-silica blends, geopolymers, Sorel cements, chemically bonded phosphate ceramics, zeolites and cement-kiln dust.

9. The method of claim 8, wherein the particulate material comprises one or more members of the list comprising: ground rubber, polypropylene, uintaite, uintahite, poly-2, 2, 1-bicyclo heptene (polynorbornene), alkylstyrene, crosslinked substituted vinyl acrylate copolymers, polyisoprene, polyvinyl acetate, polychloroprene, acrylonitrile butadiene, hydrogenated acrylonitrile butadiene, ethylene propylene diene monomer, ethylene propylene monomer, styrene-butadiene, styrene/propylene/diene monomer, brominated poly(isobutylene-co-4-methylstyrene), chlorosulphonated polyethylenes, polyacrylates, polyurethanes, silicones, chlorinated polyethylene, epichlorohydrin ethylene oxide copolymer, ethylene acrylate rubber, ethylene propylene diene terpolymers, sulphonated polyethylene, fluorosilicones, fluoroelastomer and substituted styrene acrylate copolymers.

10. The method of any one of claims 7-9, wherein the particle size of the particulate material is between about 1 µm and about 1 mm, and the particulate-material concentration is between about 1% and about 25% by volume of the composition.

11. The method of any one of claims 7-10, wherein the water-immiscible fluid comprises one or more members of the list comprising: mineral oil, diesel oil, vegetable oil, linear alpha-olefins, xylene and toluene, and the volumetric concentration of the internal phase is between about 1% and about 50% of the total liquid volume.

12. Use of an emulsion to form expanding cement sheath, the emulsion comprising water, an inorganic cement, a surfactant, a water-immiscible fluid, and one or more water-immiscible fluid swelling particulate materials.

13. Use according to claim 12, wherein the inorganic cement comprises one or more members of the list comprising: Portland cement, calcium aluminate cement, lime-silica blends, geopolymers, Sorel cements, chemically bonded phosphate ceramics, zeolites and cement-kiln dust.

14. The use of claim 12 or 13, wherein the particulate material comprises one or more members of the list comprising: ground rubber, polypropylene, uintaite, uintahite, poly-2, 2, 1-bicyclo heptene (polynorbornene), alkylstyrene, crosslinked substituted vinyl acrylate copolymers, polyisoprene, polyvinyl acetate, polychloroprene, acrylonitrile butadiene, hydrogenated acrylonitrile butadiene, ethylene propylene diene monomer, ethylene propylene monomer, styrene-butadiene, styrene/propylene/diene monomer, brominated poly(isobutylene-co-4-methylstyrene), chlorosulphonated polyethylenes, polyacrylates, polyurethanes, silicones, chlorinated polyethylene, epichlorohydrin ethylene oxide copolymer, ethylene acrylate rubber, ethylene propylene diene terpolymers, sulphonated polyethylene, fluorosilicones, fluoroelastomer and substituted styrene acrylate copolymers.

15. The use of any one of claims 12-14, wherein the water-immiscible fluid comprises one or more members of the list comprising: mineral oil, diesel oil, vegetable oil, linear alpha-olefins, xylene and toluene, and the volumetric concentration of the internal phase is between about 1% and about 50% of the total liquid volume.
